# EUROPEAN PATENT APPLICATION

(11) **EP 4 459 746 A1**
(43) Date of publication of application: **06.11.2024**
(21) Application number: 22915265.7
(22) Date of filing: 05.12.2022
(51) Int. Cl.: H01M 10/6551, F28F 3/06, H01M 10/613, H01M 10/617, H01M 10/651, H01M 10/653, H01M 10/6556

(54) **HEAT TRANSFER MEMBER**

(30) Priority: 27.12.2021 JP 2021212715
(71) Applicant: NISSAN MOTOR CO., LTD., Kanagawa 221-0023 (JP)
(72) Inventor: NAGANUMA, Ryosuke, Atsugi-shi, Kanagawa 243-0123 (JP); NAGASHIMA, Tomio, Atsugi-shi, Kanagawa 243-0123 (JP)
(74) Representative: Global IP Europe Patentanwaltskanzlei
(86) International application number: PCT/IB2022/000706
(87) International publication number: WO 2023/126673

(57) **Abstract**

Manufacturing costs are reduced and heat transfer performance is improved by adopting the configuration of a plate-form heat transfer member 1 in which one main surface, which is disposed facing a flow channel C for a cooling fluid, is provided with protrusions 2 that extend in a direction perpendicular to a direction F of flow of the cooling fluid, another main surface is flat, the protrusions 2 have an undulating profile in plan view, and undulating convex portions 2A having an apex angle *θ*t facing opposite to the direction F of flow of the cooling fluid is greater than 105° and less than 180°.

## Description

### Technical Field

The present invention relates to a heat transfer member that is used in a heat exchanger.

### Background Technology

A prior-art heat transfer member is described in, for example, Patent Citation 1. The heat transfer member (heat exchange tube) described in Patent Citation 1 has obliquely protruding parts formed obliquely along the flow direction of a heat exchange fluid on at least one of a pair of opposing surfaces (walls). The obliquely protruding parts are formed by press working so as to have a protuberant form on one of the opposing surfaces (walls) and have a recessed form on the other. The obliquely protruding parts of the heat transfer member generate a longitudinal vortex in a flow channel for the heat exchange fluid and improve heat exchange efficiency while minimizing any increase in resistance due to the generation of a turbulent flow.

### Prior Art Documents

### Patent Citations

Patent Citation 1: WO 2020-013292

### Summary of the Invention

### Problems to be Solved by the Invention

In a prior-art heat transfer member such as that described above, numerous obliquely protruding parts must be formed over the entire surface in order to improve heat transfer performance. Therefore, the prior-art heat transfer performance involves issues in that manufacturing costs including material costs and processing costs are high and processing time also becomes long, and problems have been presented in solving these issues.

The present invention was devised in view of the above problems with the prior art, it being an object of the invention to provide a heat transfer member with which manufacturing costs can be reduced and heat transfer performance can be improved.

### Means For Solving the Problems

The heat transfer member according to the present invention is a plate-form heat transfer member that is used in a heat exchanger. This heat transfer member is characterized in that: one main surface disposed facing a flow channel for a cooling fluid is provided with protrusions that extend in a direction perpendicular to a flow direction of the cooling fluid, and another main surface is flat; and the protrusions have an undulating profile in plan view, and undulating convex portions with an apex angle facing opposite to the flow direction of the cooling fluid is greater than 105° and less than 180°.

### Effect of the Invention

In the heat transfer member according to the present invention, since the other main surface is flat, when a heating element is placed on the other main surface side or a heating element is placed on the other main surface with a heat conductive material interposed therebetween, heat is transferred uniformly between the heating element and the entire other main surface. The protrusions can be formed by, for example, forging, metal wire overlay, metal 3D printing, resin processing, or the like, which allows the total extension dimension to be reduced and material to be saved because the apex angle of the wave protruding parts is an obtuse angle. In the flow direction of the cooling fluid in the heat transfer member, a turbulent flow is generated by the protrusions and the cooling fluid is stirred behind the protrusions.

As a result, manufacturing costs including material costs and processing costs can be reduced and heat transfer performance can be improved with the heat transfer member according to the present invention.

### Brief Description of the Drawings

Fig. 1 includes a plan view (A) illustrating a first embodiment of a heat transfer member according to the present invention, and a side view (B) of the heat transfer member along with a heating element;
Fig. 2 is a graph of an amount of heat exchanged per length of the protrusions;
Fig. 3 is a graph of a rate of improvement in the amount of heat exchanged when a width of the protrusions is varied compared to a case without the protrusions;
Fig. 4 is a graph of the rate of improvement in the amount of heat exchanged when undulating convex portions are aligned and when undulating convex portions are offset, compared to a case without the protrusions;
Fig. 5 is a graph of the rate of improvement in the amount of heat exchanged when a height of the protrusions is varied, compared to a case without the protrusions;
Fig. 6 includes a perspective view (A) of protrusions of which the undulating convex portions are triangular, a perspective view (B) of protrusions of which the undulating convex portions have a trapezoidal profile, and a graph (C) of a relationship between pressure loss and amount of heat exchanged in regard to the protrusions shown in A and B; and
Fig. 7 is a cross-sectional view of a battery pack, which is an example of a heat exchanger that uses the heat transfer member.

### Modes for Carrying Out the Invention

### (First Embodiment)

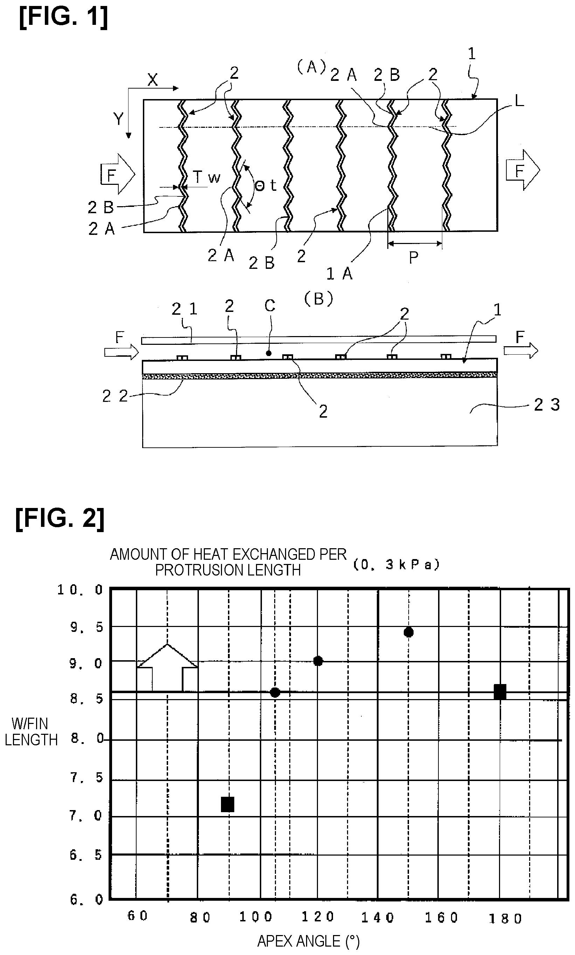

A heat transfer member 1 shown in Fig. 1(A) is a rectangular plate-form member that is used in a heat exchanger. In the heat transfer member 1, as shown in Fig. 1(B), one main surface disposed facing a flow channel C for a cooling fluid is provided with protrusions 2 that extend in a direction perpendicular to a direction F of flow of the cooling fluid, and another main surface is flat.

In the heat transfer member 1 shown in the drawing, a direction along a long side (X direction) is the direction F of flow of the cooling fluid, and a direction along a short side (Y direction) is a direction perpendicular to the flow direction F, i.e., a width direction of the flow channel C. The flow channel C is formed between one main surface of the heat transfer member 1 and a flow channel formation member 21 that faces this main surface, and a side portion (not shown) is closed. Another main surface of the heat transfer member 1 is placed on a heating element 23, with a heat conductive layer 22 made of a heat conductive material interposed therebetween.

The protrusions 2 of the heat transfer member 1 described above have an undulating profile in plan view, and undulating convex portions 2A with an apex angle *θ*t facing opposite to the flow direction of the cooling fluid is in a range greater than 105° and less than 180°. The apex angle *θ*t of the undulating convex portions 2A is preferably in a range greater than 110° and less than 170°. The protrusions 2 of this embodiment have a zigzag profile, which is an example of an undulating profile, and an angle formed by adjacent sides is in a range greater than 105° and less than 180°, this angle being the same between all adjacent sides in the illustrated example. The protrusions 2 can be formed by, for example, forging, metal wire overlay, metal 3D printing, resin processing, or the like.

Fig. 2 is a graph of an amount of heat exchanged per length of the protrusions 2. In Fig. 2, the heat transfer member 1 is a plate made of A6061, measuring 33 mm × 100 mm. The protrusions 2 measure 1 mm in width and 0.5 mm in height. The height of the flow channel C is 2.7 mm. Analyses were performed at a cooling-fluid flow rate of 0.5 to 4 L/min, a heating temperature of 50°C, and a cooling-fluid concentration of 50%.

As is clear from Fig. 2, in the protrusions 2 where the apex angle *θ*t of the undulating convex portions 2A is 90°, the total extension dimension is relatively large, and the amount of heat exchanged per length is relatively low. In the protrusions 2 (with an apex angle *θ*t of 180°) devoid of the undulating convex portions 2A, the total extension dimension is the same as the width dimension of the heat transfer member 1, and the amount of heat exchanged per length is relatively low. The amount of heat exchanged per length becomes relatively large while the total extension dimension is kept short due to the apex angle *θ*t of the undulating convex portions 2A of the protrusions 2 being in a range greater than 105° and less than 180°, and preferably in a range greater than 110° and less than 170°.

In the heat transfer member 1 of the illustrated example, the protrusions 2 are formed continuously in a range extending from one end to another end of the heat transfer member in a direction (Y direction) that is perpendicular to the flow direction F (X direction) of the cooling fluid. The protrusions 2 have, alternately, a plurality of undulating convex portions 2A and a plurality of undulating concave portions 2B on a surface facing opposite to the flow direction F. Since the protrusions 2 have a zigzag profile, the recessed and protruding parts are reversed between the upstream and downstream sides of the flow direction F, but in particular, the recessed and protruding parts on the upstream-side surface are designated as the undulating convex portions 2A and the undulating concave portions 2B.

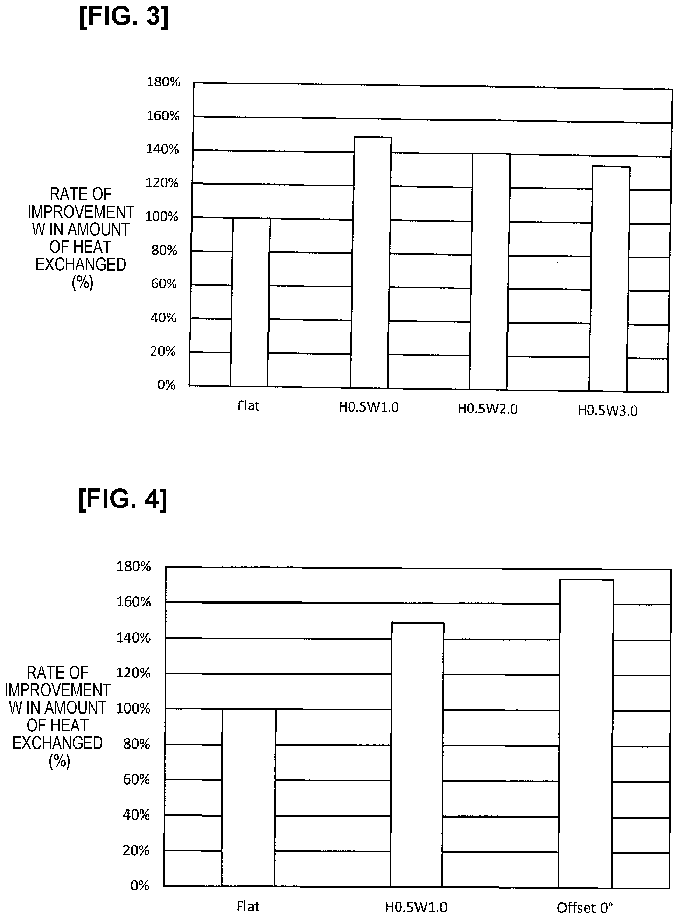

In a more preferred embodiment of the heat transfer member 2, it is desirable that the protrusions 2 measure 2 mm or less in width Tw. Fig. 3 is a graph of a rate of improvement in the amount of exchanged heat when the width Tw of the protrusions 2 is varied, where a case of no protrusions 2 (flat) is denoted as 100%. As shown in Fig. 3, the rate of improvement in the amount of heat exchanged tends to decrease slightly as the width Tw of the protrusions 2 increases, but it has been found that the amount of heat exchanged is clearly improved by the protrusions 2; in particular, setting the width Tw of the protrusions 2 to 2 mm or less causes the amount of heat exchanged to become relatively large.

Furthermore, the heat transfer member 1 in the illustrated example has a plurality of protrusions 2 (six in the drawings) at predetermined intervals in the flow direction F (X direction) of the cooling fluid, and as shown by line L in Fig. 1, the protrusions 2 are arranged such that the respective undulating convex portions 2A are aligned in the direction F of flow of the cooling fluid. The protrusions 2 in the illustrated example are arranged at a constant pitch P, but can be arranged at appropriate intervals depending on the apex angle *θ*t, the width Tw, etc.

Fig. 4 is a graph of the rate of improvement in the amount of heat exchanged when the protrusions 2 are aligned (middle of the graph) and when the protrusions 2 are offset (right side of the graph), where a case devoid of protrusions 2 (flat) is denoted as 100%. As is clear from Fig. 4, it is understood that the heat exchange rate improves in either case, and it is also understood that offsetting the undulating convex portions 2A yields a relatively greater amount of heat exchanged than aligning the undulating convex portions 2A.

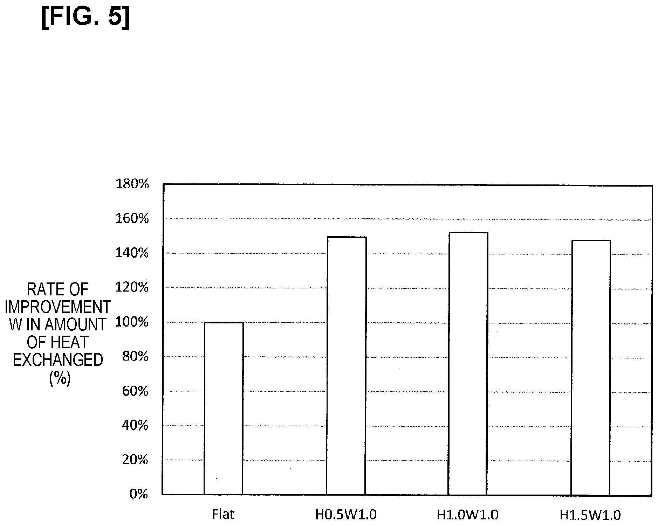

Furthermore, in a more preferred embodiment of the heat transfer member 1, it is desirable that the height of the protrusions 2 is 0.5 to 10 mm (inclusive). Fig. 5 is a graph of the rate of improvement in the amount of heat exchanged when a height of the protrusions 2 is varied, where a case of no protrusions 2 (flat) is denoted as 100%. As is clear from Fig. 5, the amount of heat exchanged is improved regardless of the height of the protrusions 2; in particular, it is understood that setting the height of the protrusions 2 to 0.5 to 10 mm (inclusive) causes the amount of heat exchanged to become relatively large.

Furthermore, in a more preferred embodiment of the heat transfer member 1, it is desirable that a Reynolds number *Re* of the cooling fluid flowing through the flow channel C is 2000 or less. Comparing heat transfer members 1 having undulating protrusions and linear protrusions to a heat transfer member 1 having no protrusions indicates that the amount of heat exchanged becomes large due to the protrusions 2 being undulating.

A temperature distribution when the heat transfer member 1 was placed in the flow path and the cooling fluid flowed through the flow channel was observed. Cooling fluid passing through the undulating concave portions 2B of the protrusions 2 flows to the top of the flow channel, the temperature of the fluid rises, and the fluid flows through spaces separated from the surface of the heat transfer member 1 behind the undulating concave portions 2B. Cooling fluid passing through the undulating convex portions 2A of the protrusions 2 remains at a low temperature and flows along the surface of the heat transfer member 1 behind the undulating convex portions 2A. Low-temperature cooling fluid that has passed through the undulating convex portions 2A and high-temperature cooling fluid that has passed through the undulating concave portions 2B are stirred on the downstream sides of the protrusions 2 of the heat transfer member 1.

The heat transfer member 1 has undulating (zigzag-shaped) protrusions 2 continuously across the flow channel C in the width direction (Y direction), and the protrusions 2 are placed at predetermined intervals in the flow direction F of the flow channel C; therefore, the above-described flow is generated behind each of the undulating convex portions 2A and undulating concave portions 2B, and cooling fluid stirring is performed over the entire surface.

When the heat transfer member 1 described in the above embodiment is placed on the other main surface a heating element 23, with a heat conductive layer 22 made of a heat conductive material interposed therebetween, as shown in Fig. 1(B), since the other main surface is flat, a distribution of heat resistance becomes more uniform, as does a thickness of the heat conductive layer 22, and heat is transferred uniformly between the heating element 23 and the heat transfer member over the entire surface.

The protrusions 2 of the heat transfer member 1 are formed by forging, metal wire overlay, metal 3D printing, resin processing, or the like, but there is no need to form numerous protrusions 2 over the entire surface; an appropriate number of protrusions 2 need only be arranged in the direction F of flow of the cooling fluid. Moreover, the total extension dimension of the protrusions 2 decreases because the apex angle *θ*t of the undulating convex portions is in a range greater than 105° and less than 180°, and more preferably in a range greater than 110° and less than 170°; i.e., the apex angle *θ*t is an obtuse angle. As a result, the amount of material used can be reduced and processing time also decreases when the protrusions 2 of the heat transfer member 1 are formed by wire overlay, metal 3D printing, resin processing, or the like.

Thus, the heat transfer member 1 makes it possible to reduce manufacturing costs including material and processing costs and to improve productivity, and heat transfer performance can be improved due to the effect resulting from the cooling fluid being stirred by the protrusions 2.

In the heat transfer member 1 described above, the protrusions 2 are formed continuously in a range spanning from one end to the other end in a direction (Y direction) perpendicular to the direction F of flow of the cooling fluid, the protrusions 2 are placed at predetermined intervals in the flow direction F, and the undulating convex portions 2A are arranged in the flow direction F. As a result, a uniform stirring area is created over the entire surface of the heat transfer member 1, the stirring area and a temperature exchange area can be optimized, and heat transfer performance can be further improved.

Furthermore, with the heat transfer member 1 described above, stirring of the cooling fluid can be optimized and heat transfer performance can be further improved due to the protrusions 8 measuring 2 mm or less in width Tw and the protrusions 2 measuring 00.5 to 10 mm (inclusive) in height.

Furthermore, with the heat transfer member 1 described above, heat transfer performance can be improved in an environment with a low flow rate and low pressure loss by having the Reynolds number of the cooling fluid flowing through the flow channel C be 2000 or less (laminar flow).

### (Second Embodiment)

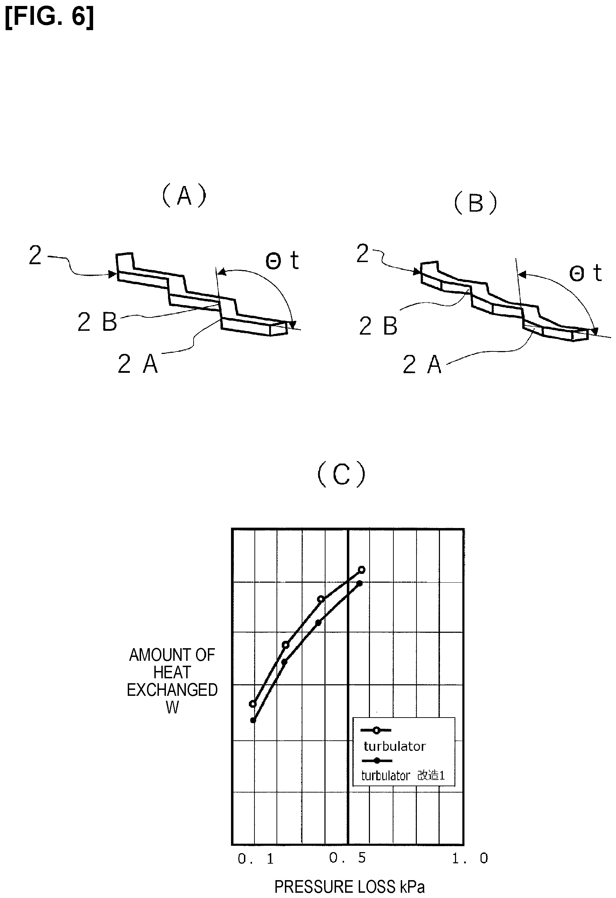

Fig. 6 shows a second embodiment of the heat transfer member according to the present invention. The protrusions 2 of the heat transfer member 1 shown in Fig. 6(A) have the triangular undulating convex portions 2A described in the first embodiment. The protrusions 2 of the heat transfer member 1 shown in Fig. 6(B) have trapezoidal undulating convex portions 2A. In this case, the apex angle *θ*t of the undulating convex portions 2A is formed by the oblique sides of the trapezoid, and the apex angle (*θ*t) is greater than 105° and less than 180°, and more preferably greater than 110° and less than 170°. Fig. 6(C) is a graph of a relationship between pressure loss and amount of heat exchanged for a heat transfer member (turbulator) shown in Fig. 6(A) and a heat transfer member (turbulator modification 1) shown in Fig. 6(B). The amount of heat exchanged increases toward the top of the graph.

As is clear from the graph of Fig. 6(C), when compared to protrusions 2 that have triangular undulating convex portions 2A, the protrusions 2 of the present embodiment, which have trapezoidal undulating convex portions 2A, have a slightly smaller amount of heat exchanged, but a substantially similar amount of heat exchanged can be obtained, and functions and effects similar to those of the first embodiment are achieved.

### (Third Embodiment)

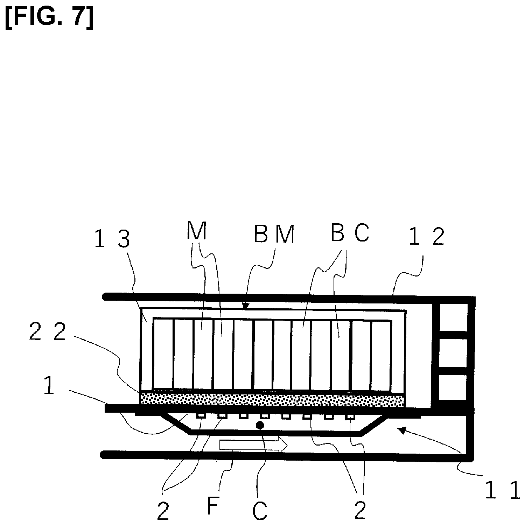

Fig. 7 shows an embodiment of a heat exchanger that uses a heat transfer member according to the present invention. Specifically, a heat exchanger 11 used in a heating element is provided with a heat transfer member 1, a heat conductive layer 22 interposed between the heat transfer member 1 and the heating element, and a cooling fluid flow channel C that is faced by one main surface of the heat transfer member 1.

The heating element of the illustrated example is a battery module BM in which a plurality of battery cells BC are housed. The heat transfer member 1 is disposed as a placement surface for the battery module BM in a frame 2. The heat conductive layer 22 mentioned above is thereby interposed between the battery module BM and the heat transfer member 1. On the underside of the heat transfer member 1, a flow channel (water jacket) C for cooling fluid is formed by the flow channel formation member 21. The heat transfer member 1 is disposed such that one main surface, which has a plurality of protrusions 2, faces into the flow channel C, and a cooling fluid flows in a direction in which the protrusions 2 are aligned (arrow F).

In the heat exchanger 11 described above, the cooling fluid is stirred in the flow channel C by the heat transfer member 1 having the protrusions 2, heat is exchanged between the battery module BM and the cooling fluid, and the battery module BM can be efficiently cooled.

The configurations of the heat transfer member and heat exchanger according to the present invention are not limited to the embodiments described above; the heat transfer member and heat exchanger can be modified as appropriate without departing from the scope of the present invention, and can be used as a heat exchanger for various heating elements.

### Key to Symbols

- 1: Heat transfer member
- 2: Protrusions
- 2A: Undulating convex portions
- 2B: Undulating recessed parts
- 11: Heat exchanger
- 22: Heat conductive layer
- BM: Battery module (heating element)
- C: Flow channel

## Claims

1. A plate-form heat transfer member that is used in a heat exchanger, the heat transfer member **characterized in that**:
one main surface disposed to face a flow channel for a cooling fluid is provided with protrusions that extend in a direction perpendicular to a flow direction of the cooling fluid; and another main surface that is flat; and
the protrusions having an undulating profile in plan view, and undulating convex portions having an apex angle facing opposite to the flow direction of the cooling fluid is greater than 105° and less than 180°.

2. The heat transfer member according to claim 1, wherein the apex angle of the undulating convex portions facing opposite to the flow direction of the cooling fluid is greater than 110° and less than 170°.

3. The heat transfer member according to claim 1 or 2, wherein the protrusions are formed continuously in a range extending from one end to another end in a direction perpendicular to the flow direction of the cooling fluid.

4. The heat transfer member according to any one of claims 1 to 3, wherein the protrusions are placed at predetermined intervals in the flow direction of the cooling fluid.

5. The heat transfer member according to claim 4, wherein the plurality of protrusions are placed such that the undulating convex portions are arranged in the flow direction of the cooling fluid.

6. The heat transfer member according to any one of claims 1 to 5, wherein the protrusions measure 2 mm or less in width.

7. The heat transfer member according to any one of claims 1 to 6, wherein the protrusions measure 0.5 to 10 mm (inclusive) in height.

8. The heat transfer member according to any one of claims 1 to 6, wherein the undulating convex portions of the protrusions have a trapezoidal profile.

9. A heat exchanger that used for a heating element, comprising the heat transfer member according to any one of claims 1 to 8, a heat conductive layer interposed between the heat transfer member and the heating element, and the flow channel for the cooling fluid being faced by the one main surface of the heat transfer member.
